# FASCICULE DE BREVET EUROPEEN

(11) **EP 2 198 277 B1**
(45) Date de publication et mention de la délivrance du brevet: **25.12.2013**
(21) Numéro de dépôt: 08838521.6
(22) Date de dépôt: 30.09.2008
(51) Int. Cl.: G01N 21/85, G01J 3/02, G01J 3/10, G01J 3/26, G01J 3/28, G01J 3/42, G01N 21/35, G01J 3/12

(54) **Dispositif de spectrométrie pour l'analyse d'un fluide**
Spektrometrievorrichtung für die Analyse eines Fluids
Spectrometry device for fluid analysis

(30) Priorité: 12.10.2007 FR 0707153
(43) Date de publication de la demande: 23.06.2010
(73) Titulaire: SP3H, 13100 Aix-en-Provence (FR)
(72) Inventeur: FOURNEL, Johan, F-84440 Robion (FR); LUNATI, Alain, F-13580 La Fare les Oliviers (FR); GERGAUD, Thierry, F-13800 Istres (FR)
(74) Mandataire: Marchand, André
(86) Numéro de dépôt international: PCT/IB2008/002600
(87) Numéro de publication internationale: WO 2009/047608

(56) Documents cités:
- FR-A- 2 566 909
- FR-A- 2 583 164
- GB-A- 2 283 091
- US-A- 4 989 942
- US-A1- 2005 140 270
- US-A1- 2007 084 990
- US-B1- 6 560 038

## Description

La présente invention concerne l'analyse des fluides. La présente invention concerne plus particulièrement l'analyse qualitative des fluides, et notamment des carburants à base d'hydrocarbures ou de biocarburants, assurant le fonctionnement d'un moteur thermique tel que ceux des véhicules.

De plus en plus, les automobiles sont équipées d'un système de gestion électronique configuré pour optimiser le fonctionnement du moteur en fonction de différents paramètres mesurés par des capteurs. De tels systèmes sont généralement configurés pour ajuster la quantité de carburant injecté dans le moteur, régler le temps d'injection, l'avance de l'allumage, la pression d'admission et le recyclage des gaz d'échappement, en fonction notamment du régime du moteur, de la température de l'huile et du liquide de refroidissement, et en fonction de paramètres extérieurs tels que la pression atmosphérique et la température ambiante.

Toutefois, cette optimisation se trouve limitée par les fluctuations de la qualité des carburants. En effet, bien que définies par des normes, les carburants sont sujets à des variations importantes de qualité en fonction du temps et du distributeur du carburant. Les carburants sont généralement caractérisés par des paramètres physico-chimiques comme des indices d'octane et la tension de vapeur pour les moteurs à allumage commandé, l'indice de cétane, le point éclair et la tenue au froid pour les moteurs Diesel, ainsi que la courbe de distillation, la densité et la teneur en composés oxygénés. Ainsi, on estime que les paramètres physicochimiques des carburants à base d'hydrocarbures peuvent varier de 15 à 40 % ou davantage, autour de valeurs moyennes normalisées spécifiées par les normes.

Or le fonctionnement d'un moteur thermique est optimisé pour un carburant normalisé. Si la qualité du carburant pris à la pompe s'écarte trop de la qualité du carburant normalisée, cette optimisation n'est plus réalisée, et le moteur aura tendance à consommer davantage de carburant et à générer davantage de gaz polluants.

Il est donc souhaitable de déterminer la qualité du carburant alimentant le moteur et de tenir compte des résultats obtenus pour gérer le fonctionnement du moteur. A cet effet, la spectrométrie d'absorption en proche infrarouge s'avère adaptée à l'évaluation qualitative d'un hydrocarbure ou d'un mélange d'hydrocarbures.

Un spectromètre traditionnel de génération d'un spectre d'absorption d'un fluide comprend généralement les éléments suivants :
- une source de lumière qui couvre au moins une bande de longueurs d'ondes dans laquelle les mesures doivent être effectuées,
- un dispositif appelé "sonde" dans la description qui suit dans lequel interagissent la lumière produite par la source de lumière et le fluide à analyser, et
- un capteur d'analyse spectrale qui analyse la lumière en sortie de la sonde.

Un tel spectromètre permet d'obtenir un spectre d'absorption se présentant sous la forme d'une courbe du type T = f(λ) donnant la quantité T de lumière ayant traversé le fluide à analyser en fonction de la longueur d'onde λ.

Un spectromètre est caractérisé principalement par sa gamme d'analyse spectrale (largeur et position des spectres générés), sa finesse d'analyse ou le nombre de points de mesure constituant les spectres fournis, sa précision de mesure sur la valeur de l'absorption et sa sensibilité, c'est-à-dire sa capacité à mesurer des quantités de lumière faible.

Les spectromètres actuels présentent généralement une grande complexité et donc un coût élevé, et un encombrement relativement important. En particulier, les spectromètres actuels comportent de nombreux composants optiques (lentilles, filtres, prismes, miroirs, réseaux de diffraction) séparés par des couches d'air. L'alignement de ces composants est critique pour le bon fonctionnement du spectromètre. Les spectromètres actuels, généralement conçus pour les laboratoires, ne sont donc guère adaptés à l'environnement d'un moteur thermique ou d'un véhicule. En particulier, ils ne sont pas conçus pour supporter les vibrations intenses générées par le moteur thermique ou le véhicule. En effet, entre la source de lumière et le dispositif d'analyse spectrale, le faisceau lumineux traverse un grand nombre de composants optiques séparés par des couches d'air. Chaque interface entre un composant optique et l'air est une source potentielle de déréglage ou dégradation.

Les sources de lumière traditionnellement utilisées en spectrométrie (lampes à incandescence ou à vapeur métallique, halogène, ...) sont incompatibles avec les contraintes de robustesse, de durée de vie et d'encombrement requises dans une application embarquée sur un moteur thermique ou dans un véhicule. L'utilisation de lasers est également à exclure car il faudrait autant de lasers que de points de mesure dans le spectre souhaité. L'utilisation de lasers est également à exclure pour des raisons de durée de vie, de stabilité et de robustesse dans un environnement hostile.

Il a par ailleurs été envisagé dans les demandes de brevets FR 2 798 582 et FR 2 789 294 d'utiliser des diodes électroluminescentes associées à des composants optiques traditionnels.

Le document US 2007/0084990 décrit un dispositif de spectrométrie miniaturisé, intégrant une source d'énergie et des détecteurs dans un seul boîtier qui renferme des composants optiques d'interface avec l'échantillon et des circuits d'acquisition et de traitement. Les circuits d'acquisition comprennent un filtre optique variable de manière continue ou un filtre matriciel couplé directement à une barrette ou une matrice de photodétecteurs.

Le document US 4 989 942 décrit un dispositif d'analyse d'un liquide comprenant une source de lumière transmise par une fibre optique à une lentille de collimation. La lumière traverse ensuite le liquide, puis est recueillie par une autre lentille de collimation, et enfin est transmise par une fibre optique à un dispositif d'analyse.

Le document FR 2 566 909 décrit un dispositif de détection d'un produit dans un liquide comprenant un faisceau de fibres optiques dont une partie transmet de la lumière au liquide, un miroir baigné par le liquide qui réfléchit la lumière vers le faisceau de fibres, l'autre partie du faisceau de fibres étant relié à un détecteur.

Le document FR 2 583 164 décrit un dispositif d'analyse de la couleur et de la turbidité d'un fluide, comprenant une source de lumière associée à une optique de focalisation pour éclairer un fluide par l'intermédiaire d'une fibre optique. La lumière est recueillie à partir du fluide à l'aide d'une autre fibre optique qui transmet la lumière à un dispositif d'analyse chromatique. Le dispositif d'analyse chromatique comprend un prisme sur lequel est focalisé le faisceau lumineux recueilli. Le spectre linéaire en sortie du prisme est focalisé sur un détecteur du type caméra-ligne qui peut être équipé d'un atténuateur dégradé permettant de corriger des différences de rendement lumineux suivant les longueurs d'onde.

Le document US 2005/0140270 décrit un émetteur de lumière comprenant plusieurs sources de lumière rouge, verte ou bleue, telles que des LEDs. La lumière émise par chaque source est concentrée par un concentrateur, puis transmise par un guide de lumière.

Le document US 6 560 038 décrit un coupleur optique présentant une symétrie de révolution, associé à une LED ou un ensemble de LEDs.

Il est donc souhaitable de réaliser un dispositif de spectrométrie d'analyse d'un fluide qui soit adapté à être embarqué sur un moteur thermique ou dans un véhicule.

Cet objectif est atteint par la prévision d'un dispositif de spectrométrie comprenant : un dispositif d'éclairage configuré pour générer un faisceau lumineux couvrant une bande de longueurs d'ondes, une sonde configurée pour que le faisceau lumineux issu du dispositif d'éclairage interagisse avec un fluide à analyser, et un dispositif d'analyse spectrale configuré pour recevoir le faisceau lumineux après avoir interagi avec le fluide à analyser, et pour fournir des mesures d'intensité lumineuse pour différentes plages de longueurs d'onde, le dispositif d'analyse spectrale comprenant un premier guide de lumière couplé à la sonde et à un premier dispositif de filtrage optique, le premier guide de lumière recevant le faisceau lumineux après avoir interagi avec le fluide à analyser et le guidant en le diffusant vers un premier ensemble de cellules photosensibles au travers du premier dispositif de filtrage optique, le premier dispositif de filtrage optique étant agencé pour transmettre à chacune des cellules photosensibles une partie du faisceau lumineux couvrant une plage de longueurs d'onde respective située dans la bande de longueurs d'onde. Selon l'invention , le premier guide de lumière présente une forme de lame en un matériau transparent, recevant le faisceau lumineux issu du fluide à analyser par une tranche de la lame et le guidant en l'étalant vers une tranche opposée de la lame en regard de laquelle sont disposés le premier dispositif de filtrage optique et le premier ensemble de cellules photosensibles.

Selon un mode de réalisation, le dispositif d'analyse spectrale comprend un second guide de lumière prélevant une partie du faisceau lumineux directement en sortie du dispositif d'éclairage, et guidant la partie du faisceau lumineux vers un second ensemble de cellules photosensibles au travers d'un second dispositif de filtrage optique agencé pour transmettre à chacune des cellules photosensibles une partie du faisceau lumineux couvrant une plage de longueurs d'onde respective située dans la bande de longueurs d'onde.

Selon un mode de réalisation, le second guide de lumière présente une forme de lame en un matériau transparent, recevant la partie du faisceau lumineux issu du dispositif d'éclairage par une tranche de la lame et le guidant en l'étalant vers une tranche opposée de la lame en regard de laquelle sont disposés le second dispositif de filtrage et le second ensemble de cellules photosensibles.

Selon un mode de réalisation, le dispositif comprend un guide de lumière à fibre optique couplé à chaque guide de lumière à lame pour lui transmettre le faisceau lumineux.

Selon un mode de réalisation, le dispositif d'analyse spectrale comprend une barrette de photodétecteurs formant soit le premier soit le premier et le second ensemble de cellules photosensibles, la barrette de photodétecteurs étant fixée à la tranche opposée d'un des guides de lumière à lame par l'intermédiaire du premier ou du premier et second dispositifs de filtrage optique.

Selon un mode de réalisation, chaque dispositif de filtrage optique comprend un filtre du type interférentiel de transmission spectrale linéairement variable sur sa longueur, et le premier dispositif de filtrage optique couvre une bande de longueurs d'onde comprise entre 700 nm et 1100 nm.

Selon un mode de réalisation, la sonde comprend un guide de lumière d'éclairage à fibre optique transmettant le faisceau lumineux issu du dispositif d'éclairage au fluide à analyser, et un guide de lumière de recueil à fibre optique couplé au guide d'éclairage et recueillant au moins partiellement le faisceau lumineux ayant traversé le fluide à analyser et le transmettant au dispositif d'analyse spectrale.

Selon un mode de réalisation, le dispositif comprend un réflecteur couplé à la sonde pour renvoyer le faisceau lumineux après avoir traversé le fluide à analyser vers le guide de lumière de recueil au travers du fluide à analyser, soit guide de lumière de recueil comprenant soit plusieurs fibres optiques de recueil réparties autour d'un guide de lumière d'éclairage, soit la sonde comprenant un coupleur optique en Y pour transmettre le faisceau lumineux en sortie du guide de lumière d'éclairage dans le fluide à analyser, et pour transmettre le faisceau lumineux issu du fluide à analyser dans le guide de lumière de recueil.

Selon un mode de réalisation, le réflecteur est réalisé de manière à réfléchir chaque rayon lumineux incident d'un faisceau lumineux sensiblement dans une direction opposée à celle du rayon lumineux incident avec un léger élargissement angulaire.

Selon un mode de réalisation, le réflecteur est de type Scotchlite® ou cataphote à prismes rétro réflecteurs, ou présente la forme d'une calotte sphérique centrée sensiblement sur le centre d'une face de sortie du guide de lumière d'éclairage.

Selon un mode de réalisation, la sonde comprend une lentille convergente disposée entre la sortie du guide de lumière d'éclairage et le fluide à analyser.

Selon un mode de réalisation, la sonde comprend une lentille convergente disposée entre la sortie du guide de lumière d'éclairage et le fluide à analyser et une lentille convergente disposée entre le guide de lumière de recueil et le fluide à analyser.

Selon un mode de réalisation, le dispositif d'éclairage comprend au moins une diode électroluminescente émettant de la lumière couvrant la bande de longueurs d'onde, couplée au guide de lumière d'éclairage.

Selon un mode de réalisation, le dispositif d'éclairage comprend plusieurs composants émetteurs de lumière émettant de la lumière dans des plages de longueurs d'onde distinctes incluses dans la bande de longueurs d'onde, et un guide de lumière d'éclairage à fibre optique couplé aux composants émetteurs de lumière pour transmettre la lumière émise par les composants émetteurs de lumière à la sonde.

Selon un mode de réalisation, le dispositif d'éclairage comprend un composant optique mélangeur pour combiner les flux lumineux émis par les composants émetteurs de lumière en un faisceau lumineux résultant couvrant la bande de longueurs d'onde, le composant optique mélangeur étant couplé au guide de lumière d'éclairage pour guider le faisceau lumineux résultant dans le guide d'éclairage, le composant optique mélangeur étant configuré pour présenter au moins l'une des caractéristiques suivantes : comprend une face d'entrée agencée pour recevoir la lumière provenant des composants émetteurs de lumière, une face de sortie couplée au guide de lumière d'éclairage, et une forme sensiblement de révolution optimisée pour transmettre un maximum de lumière des composants émetteurs de lumière au guide d'éclairage, comprend une face d'entrée agencée pour recouvrir une surface émettrice de lumière de chacun des composants émetteurs de lumière, et comprend une face d'entrée couplée par une ou plusieurs fibres optiques à une surface émettrice de lumière de chacun des composants émetteurs de lumière.

Selon un mode de réalisation, le dispositif d'éclairage présente au moins l'une des caractéristiques suivantes : produit un faisceau lumineux couvrant une bande de longueurs d'onde comprise entre 700 nm et 1100 nm, et comprend plusieurs composants émetteurs de lumière émettant de la lumière sensiblement dans la même plage de longueurs d'onde.

Des exemples de réalisation de l'invention seront décrits dans ce qui suit, à titre non limitatif en relation avec les figures jointes parmi lesquelles :
- la figure 1 représente sous la forme de bloc des fonctions d'un dispositif de spectrométrie adapté à l'environnement d'un moteur thermique ou d'un véhicule,
- la figure 2A est une vue latérale d'un dispositif d'éclairage du dispositif de spectrométrie,
- la figure 2B est une vue de face de sources lumineuses du dispositif d'éclairage,
- la figure 3 représente sous la forme de courbes des exemples de spectres d'émission de sources lumineuses du dispositif d'éclairage,
- la figure 4 est une vue latérale d'une variante de réalisation du dispositif d'éclairage du dispositif de spectrométrie,
- la figure 5A est une vue latérale d'une sonde de transmission au fluide à analyser d'un faisceau lumineux généré parole dispositif d'éclairage,
- la figure 5B est une vue en coupe d'un agencement de fibres optiques dans la sonde,
- la figure 6 est une vue latérale d'une variante de réalisation de la sonde,
- la figure 7 est une vue latérale d'une autre variante de réalisation de la sonde,
- la figure 8A est une vue de dessus d'un dispositif d'analyse spectrale du dispositif de spectrométrie,
- la figure 8B est une vue latérale du dispositif d'analyse spectrale,
- la figure 9 représente sous forme de blocs l'agencement du dispositif de spectrométrie,
- la figure 10 représente sous forme de blocs une variante d'agencement du dispositif de spectrométrie,
- la figure 11 est une vue de dessus du dispositif d'analyse spectrale du dispositif de spectrométrie représenté sur la figure 10,
- la figure 12 représente un exemple de courbe d'absorption d'un fluide obtenue par le dispositif d'analyse spectrale,
- la figure 13 représente sous forme de blocs une seconde variante d'agencement du dispositif de spectrométrie,
- la figure 14 est une vue latérale de la sonde du dispositif de spectrométrie représenté sur la figure 13.

Dans la description des figures qui suit, les mêmes éléments portent les mêmes références.

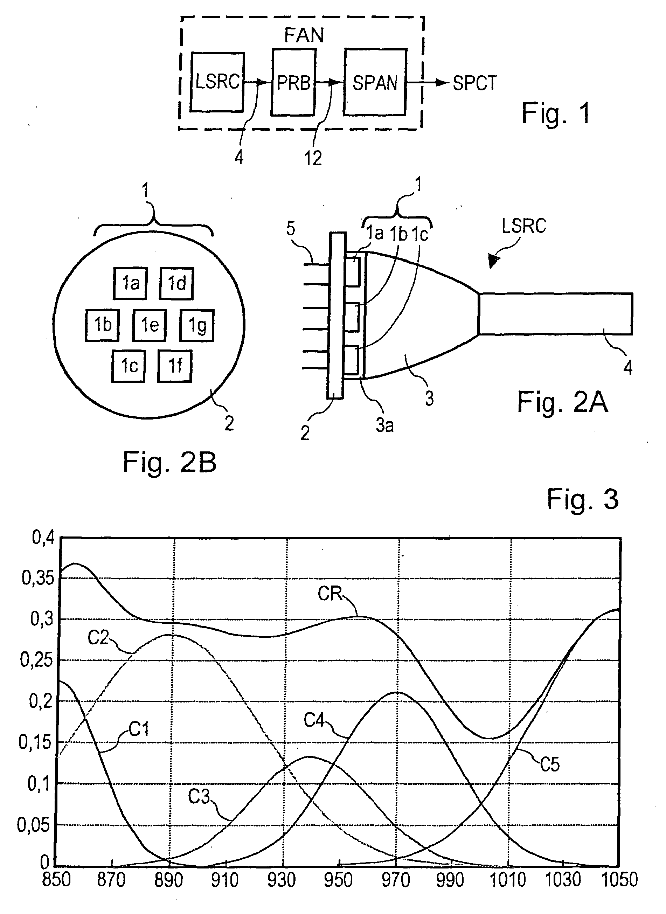

La figure 1 représente un dispositif de spectrométrie FAN pour analyser un fluide. Le dispositif FAN comprend :
- un dispositif d'éclairage LSRC couvrant au moins une bande de longueurs d'ondes dans laquelle des mesures de spectrométrie doivent être effectuées,
- une sonde PRB configurée pour que la lumière produite par le dispositif d'éclairage LSRC interagisse avec le fluide à analyser,
- un capteur d'analyse spectrale SPAN qui analyse la lumière en sortie de la sonde, et
- des éléments optiques 4, 12 configurés pour guider le faisceau lumineux entre la source et la sonde et entre la sonde et le capteur.

Le fluide à analyser peut être un gaz ou un liquide, et en particulier un hydrocarbure ou un mélange d'hydrocarbures, ou encore un mélange d'hydrocarbures et de biocarburants.

Les figures 2A et 2B représentent un mode de réalisation du dispositif d'éclairage LSRC. Le dispositif d'éclairage LSRC comprend une source de lumière 1 montée sur un support 2, et connectée à une source d'énergie (non représentée) par des broches de connexion 5. La source de lumière 1 comprend par exemple un composant émetteur de lumière du type diode électroluminescente (DEL). Le support 2 peut comprendre une plaquette de circuit imprimé sur laquelle est monté et connecté le composant émetteur de lumière 1.

Une fibre optique 4 est couplée à la surface émettrice de lumière du composant 1 pour transmettre la lumière générée vers la sonde PRB.

Si la bande de longueurs d'onde à couvrir pour réaliser les mesures de spectrométrie ne peut pas être couverte par un seul composant émetteur de lumière, plusieurs composants émetteurs de lumière 1a-1g dans différentes plages de longueurs d'onde peuvent être montés sur le support 2.

Ainsi, les diodes électroluminescentes actuelles présentent un spectre de longueur d'onde d'émission de quelques dizaines de nanomètres de large. Plusieurs diodes électroluminescentes sont donc nécessaires si le spectre à couvrir s'étend sur plusieurs centaines de nanomètres. Ainsi, le dispositif d'éclairage peut par exemple couvrir un spectre de longueurs d'ondes compris entre 700 et 1100 nm.

Le dispositif d'éclairage LSRC comprend alors un composant optique 3 configuré pour mélanger la lumière issue de chacun des composants émetteurs de lumière 1a-1g et guider la lumière mélangée vers la fibre optique 4. Le composant optique 3 peut être réalisé dans un matériau transparent dans le spectre de longueurs d'onde de mesure de l'analyseur. Le composant optique 3 est par exemple de type TIR (Total Internal Reflection), afin de transmettre avec un rendement optimum l'énergie lumineuse produite par les composants émetteurs de lumière 1a-1g à la fibre optique 4. Le composant 3 présente une face d'entrée couvrant l'ensemble des composants émetteurs de lumière 1a-1g et une face de sortie ayant sensiblement la forme et les dimensions de la face d'entrée de la fibre 4. Le composant 3 présente une forme de révolution sensiblement conique, dont la génératrice est optimisée pour transmettre à la fibre optique 4 le maximum de lumière issue des émetteurs 1a-1g. Le composant 3 est fixé sur les composants 1a-1g et sur le support 2 par exemple au moyen d'une couche de colle transparente 3a dans laquelle les composants 1a-1g sont noyés. La fibre optique 4 peut également être fixée sur le composant 3 au moyen d'une colle transparente.

La figure 3 représente six courbes de puissance lumineuse en fonction de la longueur d'onde, correspondant aux spectres d'émission C1-C5 de différentes diodes électroluminescentes, et au spectre résultant CR obtenu après mélange par le composant optique 3 des spectres C1-C5. Les spectres d'émission C1-C5 présentent chacun sensiblement la forme d'une courbe de Gauss. Les spectres C1-C5 présentent des valeurs maximum respectives au voisinage de 850 nm, de 890 nm, de 940 nm, de 970 nm, et de 1050 nm. Comme ces valeurs maximum ne sont pas identiques le dispositif d'éclairage LSRC peut comprendre plusieurs composants émetteurs de lumière présentant un spectre d'émission sensiblement identique pour que le spectre résultant CR soit le plus plat possible (puissance constante) dans la bande de longueurs d'onde à couvrir.

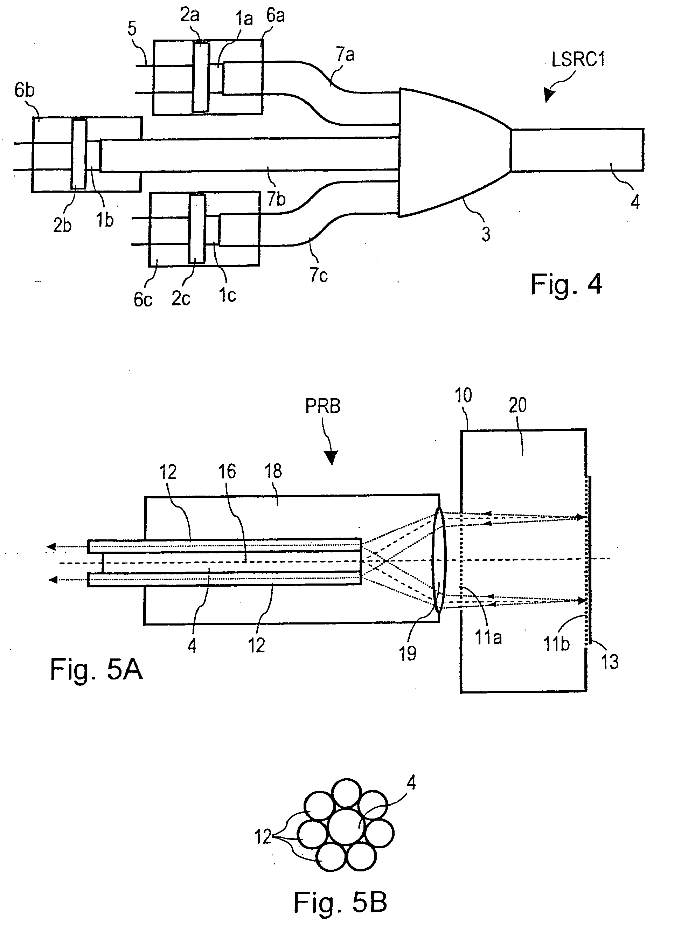

La figure 4 représente un autre mode de réalisation du dispositif d'éclairage. Sur la figure 4, le dispositif d'éclairage LSRC1 comprend plusieurs composants émetteurs de lumière 1a, 1b, 1c, chaque composant étant monté sur un support 2a, 2b, 2c, et couplé directement à une fibre optique 7a, 7b, 7c. La surface émettrice de lumière de chaque composant 1a, 1b, 1c est ainsi en contact avec la surface d'entrée de la fibre optique 7a, 7b, 7c. La surface de sortie de chaque fibre optique est couplée à un composant optique tel que le composant optique 3 précédemment décrit. Les fibres optiques 7a, 7b, 7c peuvent être fixées aux composant 1a, 1b, 1c ou aux supports 2a, 2b, 2c et au composant 3 au moyen d'une colle transparente.

Ici encore, le composant optique mélangeur 3 peut être omis. Les fibres optiques issues des diodes sont alors rassemblées en un faisceau de fibres optiques transmettant le faisceau lumineux issu du dispositif d'éclairage à la sonde PRB.

Il est à noter que dans le mode de réalisation de la figure 4, les diodes 1a-1c peuvent aussi être montées sur le même support 2 comme illustré sur les figures 2A, 2B.

La figure 5A représente la sonde PRB. La sonde PRB comprend plusieurs fibres optiques 4, 12 disposées en faisceau et une lentille convergente 19.

La figure 5B représente un exemple de disposition des fibres dans le faisceau. Sur la figure 5B, le faisceau comprend une fibre optique centrale dite d'éclairage, correspondant à la fibre 4 provenant du dispositif d'éclairage LSRC, et des fibres optiques latérales 12 dites de recueil, disposées autour de la fibre centrale 4. La fibre optique centrale 4 peut présenter un diamètre différent, par exemple supérieur à celui des fibres latérales 12. Dans l'exemple de la figure 5B, la sonde PRB comprend sept fibres 12.

La lentille 19 est couplée aux fibres 4, 12 de manière à ce que son axe optique 16 coïncide sensiblement avec celui du faisceau lumineux en sortie de la fibre centrale 4, le centre de la face de sortie de la fibre 4 étant situé au voisinage du foyer de la lentille. Le diamètre de la lentille 19 est tel qu'un faisceau de lumière transmis par la fibre 4 est entièrement transmis par la lentille vers l'infini, compte tenu de l'angle d'ouverture du faisceau lumineux en sortie de la fibre 4. L'ensemble des fibres 4, 12 et de la lentille 19 peut être logé dans un boîtier 18.

Le fluide à analyser est disposé sur le trajet du faisceau lumineux en sortie de la lentille 19. A cet effet, une conduite ou un réservoir 10 contenant le fluide à analyser 20 comporte une fenêtre transparente 11a et un réflecteur plan 13, disposés sur le trajet du faisceau lumineux en sortie de la lentille 19. Le réflecteur 13 est disposé perpendiculairement à l'axe optique 16, afin que le faisceau lumineux traverse le fluide à analyser 20 et soit réfléchi vers les fibres 4 et 12 au travers de la lentille 19. Ainsi le faisceau lumineux traverse deux fois le fluide à analyser entre la fenêtre 11a et le réflecteur 13.

Le réflecteur 13 est de type rétro réfléchissant vers la source de lumière, c'est-à-dire réfléchissant chaque rayon lumineux incident dans la direction opposée à celle du rayon lumineux incident avec une légère déflexion afin que le faisceau réfléchi soit focalisé par la lentille 19 sur une surface plus large que la fibre 4, couvrant en particulier la face d'entrée les fibres 12.

Par exemple, les surfaces réfléchissantes commercialisées sous la marque Scotchlite® par la société 3M présentent cette propriété : un faisceau lumineux qui arrive sur une telle surface repart dans une direction opposée avec un léger élargissement angulaire. Ce type de surface sert par exemple à fabriquer des vêtements de sécurité rétro réfléchissants. A cet effet, la surface réfléchissante comprend des microbilles transparentes collées sur un support et dont la moitié de la surface tournée vers le support est recouverte d'une couche réfléchissante.

Les cataphotes à prismes rétro réflecteurs présentent également cette propriété.

Cette propriété permet de compenser un défaut d'alignement entre un axe perpendiculaire au réflecteur 13 et l'axe optique 16 de la lentille 19.

La conduite ou le réservoir 10 peut comprendre une seconde fenêtre transparente 11b placée sur le trajet du faisceau lumineux, sur laquelle le réflecteur 13 est fixé.

Bien entendu, la fenêtre transparente 11a peut être confondue avec la lentille 19.

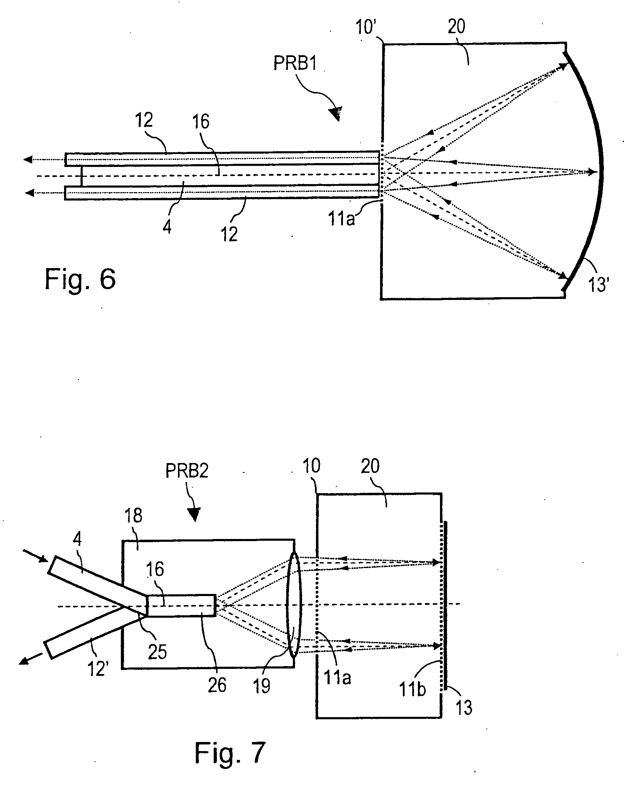

La figure 6 représente un autre mode de réalisation de la sonde. Dans ce mode de réalisation, la sonde PRB1 diffère de celle représentée sur la figure 5A par l'absence de la lentille 19. Le réservoir ou la conduite 10' contenant le fluide à analyser 20 comporte comme sur la figure 5A une fenêtre transparente 11a laissant pénétrer le faisceau lumineux issu de la fibre 4 dans le fluide à analyser. En regard de la fenêtre transparente 11a, il est prévu un réflecteur 13' en forme de calotte sphérique centrée sensiblement sur le centre de la face de sortie de la fibre 4. Ainsi, tous les rayons du faisceau lumineux en sortie de la fibre 4 parcourent sensiblement un trajet de longueur égale dans le fluide à analyser 20.

Le réflecteur 13' présente une surface rétro réfléchissante telle qu'elle élargit le faisceau réfléchi afin de couvrir les faces d'entrée des fibres 12.

Ainsi, la totalité du faisceau issu de la fibre 4 pénètre dans la conduite ou le réservoir 10' par la fenêtre transparente 11a et est réfléchi par le réflecteur 13 vers les fibres 4, 12.

Ici encore, le réflecteur 13' est disposé soit à l'intérieur de la conduite ou du réservoir, soit sur une fenêtre transparente en forme de calotte sphérique prévue dans la conduite ou le réservoir 10'.

Il peut être également prévu de solidariser l'extrémité des fibres 4, 12 au réflecteur 13' et de noyer l'ensemble dans le fluide à analyser 20.

La figure 7 représente un autre mode de réalisation de la sonde. Dans ce mode de réalisation, la sonde PRB2 diffère de celle représentée sur la figure 5A par la présence d'un coupleur en Y 25 et d'une seule fibre de recueil 12'. La sonde PRB2 comprend une fibre unique 26 transmettant le faisceau lumineux au fluide à analyser 20 et captant le faisceau lumineux provenant de ce dernier. Le coupleur 25 est configuré pour séparer les faisceaux lumineux en fonction de leur direction de propagation et ainsi d'orienter le faisceau issu du dispositif d'éclairage LSRC ou LSRC1 vers la fibre 26 et le fluide à analyser, et le faisceau lumineux ayant traversé le fluide à analyser et transmis par la fibre 26 vers la fibre optique 12' couplée à l'entrée du capteur d'analyse spectrale SPAN. Les fibres optiques 4, 26 et 12' peuvent être fixées au coupleur 25 au moyen d'une colle transparente.

Bien entendu, comme précédemment décrit en référence à la figure 6, la lentille 19 dans le mode de réalisation de la figure 7 peut être supprimée. Dans ce cas, on utilise un réflecteur en forme de calotte sphérique comme celui présenté sur la figure 6.

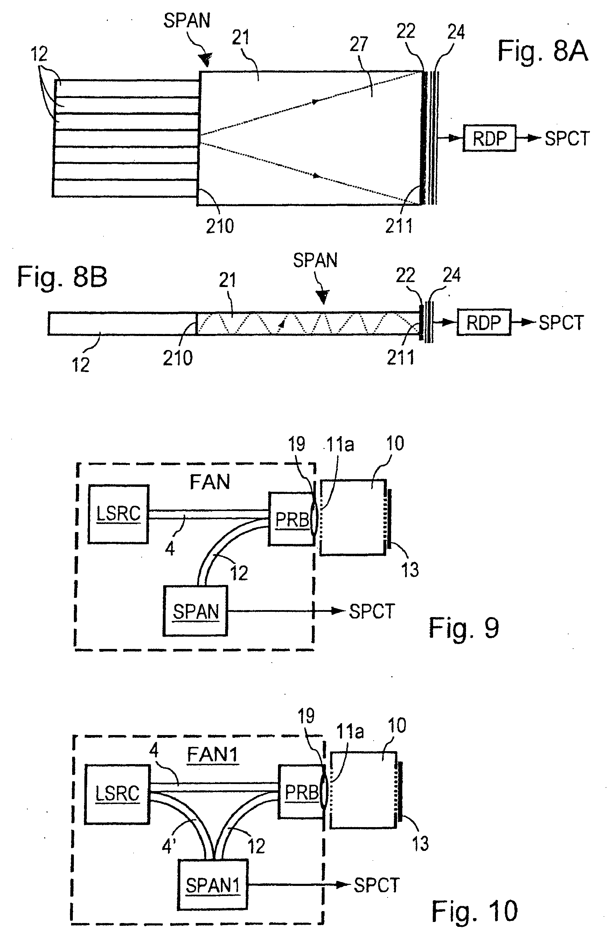

Les figures 8A, 8B représentent un capteur d'analyse spectrale SPAN selon l'invention. Le capteur SPAN comprend un guide de lumière 21, un filtre optique 22 et un capteur photosensible 24. Le guide de lumière 21 est en un matériau transparent, par exemple en verre, et présente la forme d'une lame sensiblement parallélépipédique, de faible épaisseur sensiblement égale ou supérieure au diamètre des fibres optiques 12 provenant de la sonde PRB. Chaque fibre optique de recueil 12 est fixée sur une face latérale ou tranche 210 de la lame, par exemple à l'aide d'une colle transparente.

Le capteur 24 comprend un ensemble de cellules photosensibles pouvant être disposées en barrette, et recouvertes par le filtre 22. La barrette de cellules photosensibles avec le filtre 22 recouvre la face latérale ou tranche 211 du guide 21 opposée à la face latérale ou tranche 210 où sont fixées les fibres optiques de recueil 12. Le capteur 24 est par exemple du type capteur CMOS comprenant une pluralité d'éléments photosensibles, par exemple 64 ou 128 cellules photosensibles. Le filtre 22 comprend un élément de filtre par cellule photosensible, configuré pour transmettre des rayons lumineux situés dans une plage respective de longueurs d'onde de la bande de longueurs d'onde à analyser, afin que chaque cellule photosensible fournisse la valeur d'un point de la courbe du spectre à générer. Le signal de sortie de chaque cellule constitue une mesure de quantité de lumière ayant traversé le fluide à analyser pour la plage de longueurs d'onde transmise à la cellule par le filtre 22.

Les mesures ainsi réalisées par les cellules sont envoyée à un dispositif de traitement de signaux RDP configuré pour générer un spectre de la forme I = f(λ) donnant la quantité de lumière I transmise par le fluide à analyser en fonction de la longueur d'onde λ. Le dispositif de traitement de signaux est également configuré pour déduire du spectre d'absorption ainsi généré des caractéristiques SPCT du fluide traversé par le faisceau lumineux issu du dispositif d'éclairage LSRC.

Le matériau constituant le guide 21 présente un indice de réfraction tel que tous les rayons lumineux introduits par la tranche 210 sont réfléchis par les parois du guide et ne ressortent de celui-ci que par la tranche opposée 211. Ainsi les faisceaux lumineux en sortie des fibres optiques de recueil 12 sont transmis en totalité au filtre 22. La géométrie ainsi choisie du guide 21 permet de répartir d'une manière sensiblement homogène les faisceaux lumineux provenant de la sonde PRB sur toute la surface du filtre 22.

Le guide 21 présente par exemple une épaisseur d'environ 1 mm et une largeur d'environ 7 mm pour sept fibres de recueil 12, ayant chacune environ 1 mm de diamètre. La longueur du guide 21 est par exemple déterminée en fonction de l'angle d'ouverture du faisceau lumineux en sortie des fibres 12 dans le guide 21, de manière à ce que le faisceau 27 en sortie de la fibre de recueil fixée au milieu de la largeur du guide 21 couvre la totalité du filtre 22.

Le filtre 22 peut être du type interférentiel de transmission spectrale linéairement variable sur sa longueur, laissant passer chaque composante de longueur d'onde du faisceau lumineux reçu en une position fonction de sa longueur d'onde, le long de la largeur de la face (tranche) de sortie 211 du guide 21. Ainsi, chaque cellule photosensible du capteur 24 reçoit des rayons lumineux situés dans une bande de longueur d'onde distincte, et deux cellules adjacentes du capteur reçoivent des rayons lumineux situés dans deux plages de longueurs d'onde contiguës.

Bien entendu, si la sonde comprend une seule fibre optique de recueil comme la fibre 12' sur la figure 7, une seule fibre est fixée sur la face (tranche) d'entrée 210 du guide de lumière 21, de préférence au milieu de cette face.

La figure 9 représente l'agencement des différents composants précédemment décrits dans le dispositif de spectrométrie FAN. Sur la figure 9, le dispositif d'éclairage LSRC est relié à la sonde PRB (ou PRB1, PRB2) par l'intermédiaire de la fibre optique 4. Dans le cas de la sonde PRB ou PRB2, la lentille 19 est placée en regard de la fenêtre transparente 11a et du réflecteur 13 sur la conduite ou le réservoir 10 contenant le fluide analyser 20. La sonde PRB (ou PRB1, PRB2) est reliée au capteur d'analyse spectrale SPAN par l'intermédiaire des fibres optiques 12 (ou de la fibre optique 12' dans le cas de la sonde PRB2).

La figure 10 représente un autre mode de réalisation du dispositif de spectrométrie. Sur la figure 10, le dispositif de spectrométrie FAN1 diffère du dispositif de spectrométrie FAN en ce qu'il comprend un dispositif d'analyse spectrale SPAN1, et une fibre optique 4' reliant la sortie du dispositif d'éclairage LSRC au dispositif SPAN1.

Sur les figures .9 et 10., le dispositif d'éclairage peut être également le dispositif LSRC1.

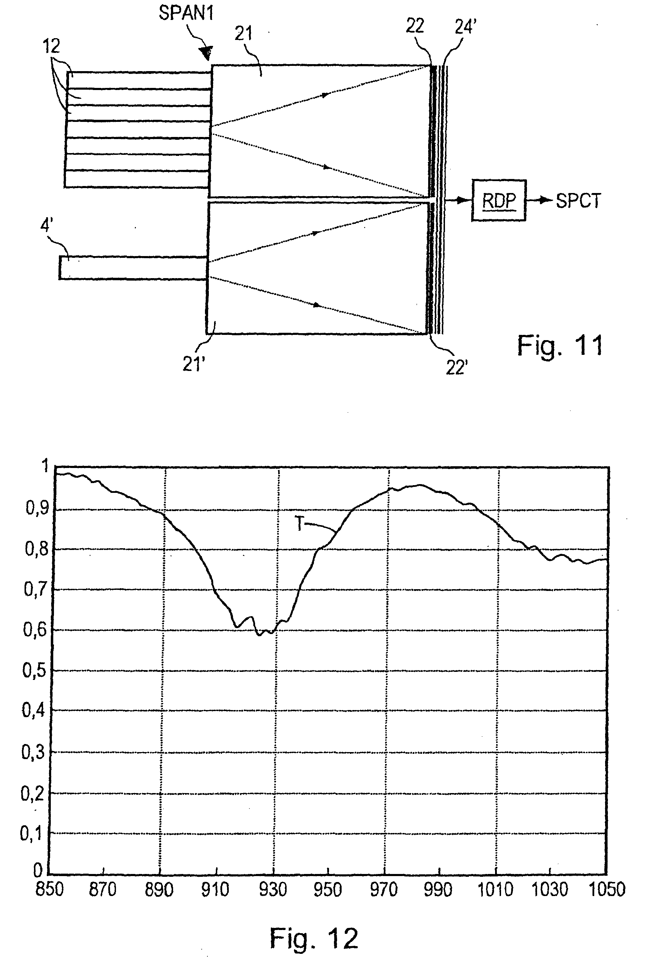

La figure 11 représente le capteur d'analyse spectrale SPAN1 du dispositif de spectrométrie FAN1. Sur la figure 11, le capteur d'analyse spectrale SPAN1 comprend deux capteurs tel que celui SPAN représenté sur les figures 8A, 8B. Ainsi, le capteur SPAN1 comprend deux guides de lumière 21, 21' et deux filtres optiques 22, 22' et deux capteurs photosensibles. La face d'entrée du guide 21 est couplée aux fibres optiques 12 et la face d'entrée du guide 21' est couplée à la fibre optique 4'.

La fibre optique 4' peut être connectée au dispositif d'éclairage LSRC (ou LSRC1) par l'intermédiaire d'un coupleur de fibres optiques (non représenté) connu en soi, capable de transmettre le faisceau lumineux en sortie du composant mélangeur 3 sensiblement sans pertes et d'une manière équilibrée aux deux fibres optiques 4, 4'.

Dans l'exemple de la figure 11, le capteur SPAN1 comprend un seul capteur photosensible 24'comprenant deux fois plus de cellules photosensibles, par exemple 128 ou 256 pour analyser les faisceaux lumineux transmis par les deux guides 21, 21' associé chacun à un filtre 22, 22'.

La lumière transmise directement du dispositif d'éclairage LSRC par la fibre 4' est analysée au travers du filtre 22' et donne pour chaque longueur d'onde λ la quantité de lumière R(λ) émise par le dispositif d'éclairage.

La lumière transmise de la sonde PRB par les fibres de recueil 12 donne pour chaque longueur d'onde λ la quantité de lumière t(λ) ayant traversé le fluide à analyser.

Le dispositif SPAN1 peut ainsi constituer un spectre de transmission corrigé tenant compte des fluctuations éventuelles du faisceau lumineux issu du dispositif d'éclairage, de la forme T(λ) = t(λ)/R(λ).

La figure 12 représente un exemple d'un tel spectre d'absorption T entre les longueurs d'onde égales à 850 nm et 1050 nm, T étant égal sensiblement..à 1 lorsque le fluide est totalement transparent à la longueur d'onde λ correspondante et égal sensiblement à 0 lorsque le fluide est totalement opaque à la longueur d'onde λ correspondante.

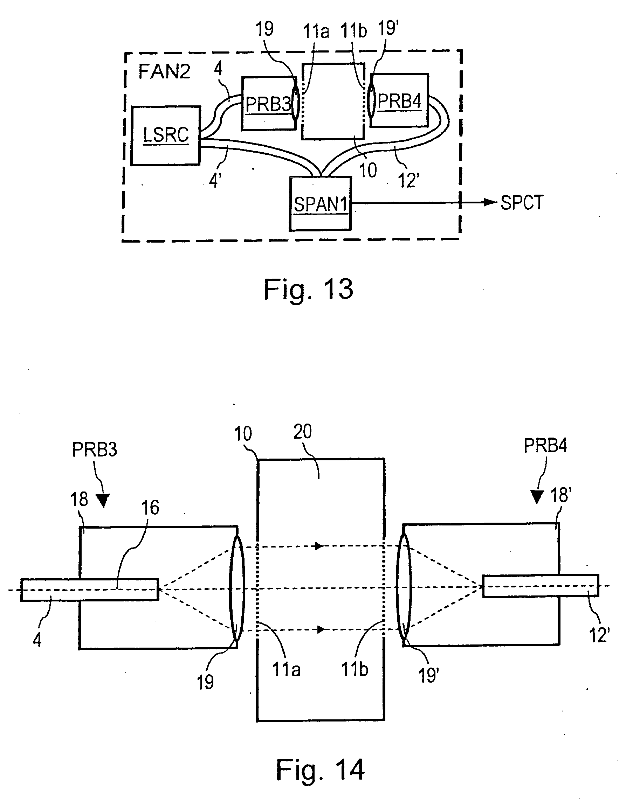

La figure 13 représente un autre mode de réalisation du dispositif de spectrométrie. Sur la figure 13, le dispositif de spectrométrie FAN2 diffère du dispositif FAN1 par la présence d'une sonde modifiée comportant deux parties PRB3, PRB4, à savoir une partie de sonde PRB3 connectée au dispositif d'éclairage LSRC et une partie de sonde PRB4 connectée au capteur d'analyse SPAN1. Les deux parties de sondes PRB3, PRB4 sont placées de part et d'autre de la conduite ou du réservoir 10 devant des fenêtres transparentes 11a, 11b, la partie PRB1 étant connectée à la fibre 4 pour transmettre le faisceau lumineux généré par le dispositif d'éclairage au fluide à analyser 20, et la partie PRB2 recevant le faisceau lumineux après avoir traversé le fluide à analyser, et le transmettant à la fibre 12'.

Bien entendu, le dispositif d'éclairage LRSC1 peut également être utilisé dans le dispositif FAN2.

La figure 14 représente les deux parties de sonde PRB3, PRB4. La partie PRB3 comprend le boîtier 18 et la lentille 19 de la sonde PRB. La partie PRB4 comprend une lentille 19' qui focalise le faisceau lumineux ayant traversé le fluide à analyser 20 et la fenêtre 11b, sur le centre de la face d'entrée de la fibre 12'. L'ensemble de la lentille 19' et de l'extrémité de la fibre 12' peut être monté dans un boîtier 18'. Dans cet agencement, les fibres 4, 12' et les lentilles 19, 19' sont couplées entre elles, de manière à ce que l'axe du faisceau lumineux en sortie de la fibre 4, coïncide avec l'axe optique 16 des lentilles 19, 19' et avec l'axe d'entrée de la fibre 12'.

Il est à noter ici également que les lentilles 19, 19' peuvent constituer les fenêtres transparentes 11a, 11b.

Bien entendu, les fibres optiques 4, 4', 12, 12' précédemment décrites reliant entre eux le dispositif d'éclairage LSRC, LSRC1, la sonde PRB, PRB1-PRB4 et le dispositif d'analyse SPAN, SPAN1 peuvent être remplacées par des faisceaux de fibres.

L'alignement des différents éléments optiques du dispositif de spectrométrie FAN, FAN1, FAN2 est effectué lors de l'assemblage de ces éléments et de leur connexion par des fibres optiques. L'assemblage peut être réalisé de manière à former un seul bloc sans air ni vide entre les composants optiques grâce à l'usage de fibres optiques, ce qui permet également de rendre le dispositif insensible aux vibrations. Ainsi, l'ensemble des composants et des fibres optiques du dispositif peut par exemple être noyé dans une résine, par exemple de type "potting", adaptée pour résister aux milieux agressifs.

En outre, le dispositif de spectrométrie FAN, FAN1, FAN2 utilise exclusivement des composants de faible coût et à longue durée de vie, et sa constitution le rend compatible à une fabrication en grande série. Le dispositif de spectrométrie s'avère donc parfaitement adapté à l'environnement d'un moteur thermique et d'un véhicule.

Il apparaîtra clairement à l'homme de l'art que la présente invention est susceptible de diverses variantes de réalisation et (diverses) applications. En particulier, l'invention n'est pas limitée à l'usage de fibres optiques pour relier les différents éléments (dispositif d'éclairage, sonde et dispositif d'analyse spectrale) du dispositif de spectrométrie. L'invention n'est pas non plus limitée à un dispositif comportant une seule fibre optique reliant le dispositif d'éclairage à la sonde et au dispositif d'analyse spectrale, et à une ou sept fibres optiques reliant la sonde au dispositif d'analyse spectrale. En effet, ces liaisons peuvent être également réalisées par des guides de lumière constitués d'un faisceau de fibres optiques.

L'invention peut également comprendre un dispositif d'éclairage sans composant optique mélangeur 3. En effet, ce composant peut être omis si l'on utilise une fibre optique ou un faisceau de fibres optiques ayant une face d'entrée couvrant l'ensemble des diodes électroluminescentes. La fibre optique ou le faisceau peuvent alors être fixés sur les diodes au moyen d'une couche de colle transparente dans laquelle les diodes sont noyées. En l'absence du composant optique mélangeur 3, les faisceaux lumineux situés dans différentes plages de longueurs d'onde générés par les diodes électroluminescentes 1a-1g sont mélangés dans le fluide à analyser, puis recueillies par les fibres optiques 12 ou la fibre 12' et le guide optique 21. Dans le mode de réalisation de la figure 11, les faisceaux lumineux envoyés directement vers le dispositif d'analyse spectrale SPAN1 sont mélangés dans la fibre 4' et dans le guide de lumière 21'.

## Revendications

1. Dispositif de spectrométrie comprenant :
un dispositif d'éclairage (LSRC, LSRC1) configuré pour générer un faisceau lumineux couvrant une bande de longueurs d'ondes,
une sonde (PRB, PRB1-PRB4) configurée pour que le faisceau lumineux issu du dispositif d'éclairage interagisse avec un fluide à analyser (20), et
un dispositif d'analyse spectrale (SPAN, SPAN1) configuré pour recevoir le faisceau lumineux après avoir interagi avec le fluide à analyser, et pour fournir des mesures d'intensité lumineuse pour différentes plages de longueurs d'onde, le dispositif d'analyse spectrale (SPAN, SPAN1) comprenant un premier guide de lumière (21) couplé à la sonde (PRB, PRB1-PRB4) et à un premier dispositif de filtrage optique (22), le premier guide de lumière recevant le faisceau lumineux après avoir interagi avec le fluide à analyser (20) et le guidant en le diffusant vers un premier ensemble de cellules photosensibles (24, 24') au travers du premier dispositif de filtrage optique, le premier dispositif de filtrage optique étant agencé pour transmettre à chacune des cellules photosensibles une partie du faisceau lumineux couvrant une plage de longueurs d'onde respective située dans la bande de longueurs d'onde,
**caractérisé en ce que** le premier guide de lumière (21) présente une forme de lame en un matériau transparent, recevant le faisceau lumineux issu du fluide à analyser (20) par une tranche (210) de la lame et le guidant en l'étalant vers une tranche opposée (211) de la lame en regard de laquelle sont disposés le premier dispositif de filtrage optique (22) et le premier ensemble de cellules photosensibles (24, 24').

2. Dispositif selon la revendication 1, dans lequel le dispositif d'analyse spectrale (SPAN1) comprend un second guide de lumière (21') prélevant une partie du faisceau lumineux directement en sortie du dispositif d'éclairage (LSRC, LSRC1), et guidant la partie du faisceau lumineux vers un second ensemble de cellules photosensibles (24') au travers d'un second dispositif de filtrage optique (22') agencé pour transmettre à chacune des cellules photosensibles une partie du faisceau lumineux couvrant une plage de longueurs d'onde respective située dans la bande de longueurs d'onde.

3. Dispositif selon la revendication 2, dans lequel le second guide de lumière (21') présente une forme de lame en un matériau transparent, recevant la partie du faisceau lumineux issu du dispositif d'éclairage (LSRC, LSRC1) par une tranche de la lame et le guidant en l'étalant vers une tranche opposée de la lame en regard de laquelle sont disposés le second dispositif de filtrage (22') et le second ensemble de cellules photosensibles (24').

4. Dispositif selon l'une des revendications 1 à 3, comprenant un guide de lumière (12, 12', 4') à fibre optique couplé à chaque guide de lumière à lame (21, 21') pour lui transmettre le faisceau lumineux.

5. Dispositif selon l'une des revendications 1 à 4, dans lequel le dispositif d'analyse spectrale (SPAN, SPAN1) comprend une barrette de photodétecteurs (24, 24') formant soit le premier soit le premier et le second ensemble de cellules photosensibles, la barrette de photodétecteurs étant fixée à la tranche opposée (211) d'un des guides de lumière à lame (21, 21') par l'intermédiaire du premier ou du premier et second dispositifs de filtrage optique (22, 22').

6. Dispositif selon l'une des revendications 1 à 5, dans lequel chaque dispositif de filtrage optique (22, 22') comprend un filtre du type interférentiel de transmission spectrale linéairement variable sur sa longueur, et le premier dispositif de filtrage optique (22) couvre une bande de longueurs d'onde comprise entre 700 nm et 1100 nm.

7. Dispositif selon l'une des revendications 1 à 6, dans lequel la sonde (PRB, PRB1-PRB4) comprend un guide de lumière d'éclairage (4) à fibre optique transmettant le faisceau lumineux issu du dispositif d'éclairage (LSRC, LSRC1) au fluide à analyser (20), et un guide de lumière de recueil (12, 12') à fibre optique couplé au guide d'éclairage et recueillant au moins partiellement le faisceau lumineux ayant traversé le fluide à analyser et le transmettant au dispositif d'analyse spectrale (SPAN, SPAN1).

8. Dispositif selon la revendication 7, comprenant un réflecteur (13, 13') couplé à la sonde pour renvoyer le faisceau lumineux après avoir traversé le fluide à analyser (20) vers le guide de lumière de recueil (12) au travers du fluide à analyser, soit le guide de lumière de recueil comprenant plusieurs fibres optiques de recueil (12) réparties autour d'un guide de lumière d'éclairage (4), soit la sonde (PRB2) comprenant un coupleur optique en Y (25) pour transmettre le faisceau lumineux en sortie du guide de lumière d'éclairage (4) dans le fluide à analyser (20), et pour transmettre le faisceau lumineux issu du fluide à analyser dans le guide de lumière de recueil (12').

9. Dispositif selon la revendication 8, dans lequel le réflecteur (13, 13') est réalisé de manière à réfléchir chaque rayon lumineux incident d'un faisceau lumineux sensiblement dans une direction opposée à celle du rayon lumineux incident avec un léger élargissement angulaire.

10. Dispositif selon la revendication 9, dans lequel le réflecteur (13, 13') est de type Scotchlite® ou cataphote à prismes rétro réflecteurs, ou présente la forme d'une calotte sphérique centrée sensiblement sur le centre d'une face de sortie du guide de lumière d'éclairage (4).

11. Dispositif selon l'une des revendications 8 et 9, dans lequel la sonde comprend une lentille convergente (19) disposée entre la sortie du guide de lumière d'éclairage (4) et le fluide à analyser (20).

12. Dispositif selon la revendication 7, dans lequel la sonde (PRB3, PRB4) comprend une lentille convergente (19) disposée entre la sortie du guide de lumière d'éclairage (4) et le fluide à analyser (20) et une lentille convergente (19') disposée entre le guide de lumière de recueil (12) et le fluide à analyser.

13. Dispositif selon l'une des revendications 1 à 12, dans lequel le dispositif d'éclairage comprend au moins une diode électroluminescente (1a-1g) émettant de la lumière couvrant la bande de longueurs d'onde, couplée au guide de lumière d'éclairage (4).

14. Dispositif selon l'une des revendications 1 à 13, dans lequel le dispositif d'éclairage (LSRC, LSRC1) comprend plusieurs composants émetteurs de lumière (1a-1g) émettant de la lumière dans des plages de longueurs d'onde distinctes incluses dans la bande de longueurs d'onde, et un guide de lumière d'éclairage (4) à fibre optique couplé aux composants émetteurs de lumière pour transmettre la lumière émise par les composants émetteurs de lumière à la sonde (PRB, PRB1-PKB4).

15. Dispositif selon la revendication 14, dans lequel le dispositif d'éclairage (LSRC, LSRC1) comprend un composant optique mélangeur (3) pour combiner les flux lumineux émis par les composants émetteurs de lumière (1a-1g) en un faisceau lumineux résultant couvrant la bande de longueurs d'onde, le composant optique mélangeur étant couplé au guide de lumière d'éclairage (4) pour guider le faisceau lumineux résultant dans le guide d'éclairage, le composant optique mélangeur (3) étant configuré pour présenter au moins l'une des caractéristiques suivantes :
comprend une face d'entrée agencée pour recevoir la lumière provenant des composants émetteurs de lumière (1a-1g), une face de sortie couplée au guide de lumière d'éclairage (4), et une forme sensiblement de révolution optimisée pour transmettre un maximum de lumière des composants émetteurs de lumière au guide d'éclairage,
comprend une face d'entrée agencée pour recouvrir une surface émettrice de lumière de chacun des composants émetteurs de lumière (1a-1g), et
comprend une face d'entrée couplée par une ou plusieurs fibres optiques (7a, 7b, 7c) à une surface émettrice de lumière de chacun des composants émetteurs de lumière (1a-1c).

16. Dispositif selon l'une des revendications 1 à 15, dans lequel le dispositif d'éclairage (LSRC, LSRC1) présente au moins l'une des caractéristiques suivantes :
produit un faisceau lumineux couvrant une bande de longueurs d'onde comprise entre 700 nm et 1100 nm,
comprend plusieurs composants émetteurs de lumière émettant de la lumière sensiblement dans la même plage de longueurs d'onde.

## Patentansprüche

1. Spektrometervorrichtung umfassend:
eine Beleuchtungsvorrichtung (LSRC, LSRC1), die dafür konfiguriert ist, ein Lichtbündel zu erzeugen, das ein Wellenlängenband abdeckt.
eine Sonde (PRB, PRB1-PRB4), die derart konfiguriert ist, dass das aus der Beleuchtungsvorrichtung ausgetretene Lichtbündel mit einem zu analysierenden Fluid (20) interagiert, und
eine Spektralanalysenvorrichtung (SPAN, SPAN1), die dafür konfiguriert ist, das Lichtbündel zu empfangen, nachdem es mit dem zu analysierenden Fluid interagiert hat und um Lichtintensitätsmessungen für verschiedene Wellenlängenbereiche zu liefern, wobei die Spektralanalysenvorrichtung (SPAN, SPAN1) einen ersten Lichtleiter (21) umfasst, der mit der Sonde (PRB, PRB1-PRB4) und einer ersten optischen Filtervorrichtung (22) gekoppelt ist, wobei der erste Lichtleiter das Lichtbündel, nachdem es mit dem zu analysierenden Fluid (20) interagiert hat, empfängt und unter Abstrahlung über die erste optische Filtervorrichtung an einen ersten Satz lichtempfindlicher Zellen (24, 24') leitet, wobei die erste optische Filtervorrichtung dafür ausgelegt ist, einen einen im Wellenlängenband gelegenen entsprechenden Wellenlängenbereich abdeckenden Teil des Lichtbündels an jede lichtempfindliche Zelle weiterzuleiten, **dadurch gekennzeichnet, dass** der erste Lichtleiter (21) die Form eines Plättchens aus einem transparenten Material aufweist, das das aus dem zu analysierenden Fluid (20) ausgetretene Lichtbündel über eine Kante (210) des Plättchens empfängt und es unter Ausbreitung an eine gegenüberliegende Kante (211) des Plättchens, gegenüber dem die erste optische Filtervorrichtung (22) und der erste Satz lichtempfindlicher Zellen (24, 24') angeordnet sind, leitet.

2. Vorrichtung nach Anspruch 1, bei der die Spektralanalysenvorrichtung (SPAN1) einen zweiten Lichtleiter (21') umfasst, der einen Teil des Lichtbündels direkt am Ausgang der Beleuchtungsvorrichtung (LSRC, LSRC1) entnimmt und den Teil des Lichtbündels über eine zweite optische Filtervorrichtung (22'), die dafür ausgelegt ist, einen einen im Wellenlängenband gelegenen entsprechenden Wellenlängenbereich abdeckenden Teil des Lichtbündels an jede lichtempfindliche Zelle weiterzuleiten, an einen zweiten Satz lichtempfindlicher Zellen (24') leitet.

3. Vorrichtung nach Anspruch 2, bei der der zweite Lichtleiter (21') die Form eines Plättchens aus einem transparenten Material aufweist, das den Teil des aus der Beleuchtungsvorrichtung (LSRC, LSRC1) ausgetretenen Lichtbündels über eine Kante des Plättchens empfängt und ihn unter Ausbreitung an eine gegenüberliegende Kante des Plättchens, gegenüber dem die zweite Filtervorrichtung (22') und der zweite Satz lichtempfindlicher Zellen (24') angeordnet sind, leitet.

4. Vorrichtung nach einem der Ansprüche 1 bis 3, umfassend einen faseroptischen Lichtleiter (12, 12', 4'), der mit jedem Plättchen-Lichtleiter (21, 21') gekoppelt ist, um das Lichtbündel an es weiterzuleiten.

5. Vorrichtung nach einem der Ansprüche 1 bis 4, bei der die Spektralanalysenvorrichtung (SPAN, SPAN1) einen Fotodetektorstreifen (24, 24') umfasst, der entweder den ersten oder den ersten und den zweiten Satz lichtempfindlicher Zellen bildet, wobei der Fotodetektorstreifen mittels der ersten oder der ersten und zweiten optischen Filtervorrichtung (22, 22') an der gegenüberliegenden Kante (211) eines der Plättchen-Lichtleiter (21, 21') befestigt ist.

6. Vorrichtung nach einem der Ansprüche 1 bis 5, bei der jede optische Filtervorrichtung (22, 22') einen Interferenzfilter für eine linear, über seine Länge variierbare spektrale Transmission umfasst und die erste optische Filtervorrichtung (22) ein zwischen 700 nm und 1100 nm liegendes Wellenlängenband abdeckt.

7. Vorrichtung nach einem der Ansprüche 1 bis 6, bei der die Sonde (PRB, PRB1-PRB4) einen faseroptischen Beleuchtungslichtleiter (4) umfasst, der das aus der Beleuchtungsvorrichtung (LSRC, LSRC1) ausgetretene Lichtbündel an das zu analysierende Fluid (20) weiterleitet, sowie einen faseroptischen Sammellichtleiter (12, 12'), der mit dem Beleuchtungsleiter gekoppelt ist und das Lichtbündel, das das zu analysierende Fluid durchdrungen hat, wenigstens teilweise auffängt und an die Spektralanalysenvorrichtung (SPAN, SPAN1) weiterleitet.

8. Vorrichtung nach Anspruch 7, umfassend einen Reflektor (13, 13'), der mit der Sonde gekoppelt ist, um das Lichtbündel durch das zu analysierende Fluid hindurch an den Sammellichtleiter (12) zurückzusenden, nachdem es das zu analysierende Fluid (20) durchdrungen hat, wobei entweder der Sammellichtleiter mehrere optische Sammelfasern (12) umfasst, die um einen Beleuchtungslichtleiter (4) verteilt sind, oder die Sonde (PRB2) einen optischen Y-Koppler (25) umfasst, um das Lichtbündel am Ausgang des Beleuchtungslichtleiters (4) in das zu analysierende Fluid (20) zu leiten und um das, aus dem zu analysierenden Fluid ausgetretene Lichtbündel in den Sammellichtleiter (12') zu leiten.

9. Vorrichtung nach Anspruch 8, bei der der Reflektor (13, 13') derart konstruiert ist, dass er jeden einfallenden Lichtstrahl eines Lichtbündels im Wesentlichen in eine dem einfallenden Lichtstrahl entgegengesetzte Richtung mit einer geringen Winkelerweiterung reflektiert.

10. Vorrichtung nach Anspruch 9, bei der der Reflektor (13, 13') vom Typ Scotchlite® oder ein Rückstrahler mit reflektierenden Prismen ist oder die Form einer Kugelkalotte aufweist, die im Wesentlichen auf die Mitte einer Austrittsseite des Beleuchtungslichtleiters (4) zentriert ist.

11. Vorrichtung nach einem der Ansprüche 8 und 9, bei der die Sonde eine, zwischen dem Ausgang des Beleuchtungslichtleiters (4) und dem zu analysierenden Fluid (20) angeordnete konvergierende Linse (19) umfasst.

12. Vorrichtung nach Anspruch 7, bei der die Sonde (PRB3, PRB4) eine, zwischen dem Ausgang des Beleuchtungslichtleiters (4) und dem zu analysierenden Fluid (20) angeordnete konvergierende Linse (19) und eine zwischen dem Sammellichtleiter (12) und dem zu analysierenden Fluid angeordnete konvergierende Linse (19') umfasst.

13. Vorrichtung nach einem der Ansprüche 1 bis 12, bei der die Beleuchtungsvorrichtung wenigstens eine mit dem Beleuchtungslichtleiter (4) gekoppelte Leuchtdiode (1a-1g) umfasst, die ein das Wellenlängenband abdeckendes Licht abgibt.

14. Vorrichtung nach einem der Ansprüche 1 bis 13, bei der die Beleuchtungsvorrichtung (LSRC, LSRC1) mehrere lichtemittierende Bauteile (1a-1g), die Licht in distinkten, im Wellenlängenband inbegriffenen Wellenlängenbereichen abgeben, und einen faseroptischen Beleuchtungslichtleiter (4), der mit den lichtemittierenden Bauteilen gekoppelt ist, um das von den lichtemittierenden Bauteilen emittierte Licht an die Sonde (PRB, PRB1- PRB4) weiterzuleiten, umfasst.

15. Vorrichtung nach Anspruch 14, bei der die Beleuchtungsvorrichtung (LSRC, LSRC1) ein optisches Misch-Bauteil (3) umfasst, um die von den lichtemittierenden Bauteilen (1a-1g) emittierten Lichtströme zu einem resultierenden, das Wellenlängenband abdeckenden Lichtbündel zu kombinieren, wobei das optische Misch-Bauteil mit dem Beleuchtungslichtleiter (4) gekoppelt ist, um das resultierende Lichtbündel in den Beleuchtungsleiter zu leiten, wobei das optische Misch-Bauteil (3) derart konfiguriert ist, dass es wenigstens eines der folgenden Kennzeichen aufweist:
es umfasst eine Eingangsseite, die dafür ausgelegt ist, das von den lichtemittierenden Bauteilen (1a-1g) ausgehende Licht zu empfangen, eine mit dem Beleuchtungslichtleiter (4) gekoppelte Ausgangsseite und eine Form mit einer im Wesentlichen optimierten Rotation, um ein Maximum an Licht von den lichtemittierenden Bauteilen an den Beleuchtungsleiter weiterzuleiten,
es umfasst eine Eingangsseite, die dafür ausgelegt ist, eine lichtemittierende Fläche jedes lichtemittierenden Bauteils (1a-1g) abzudecken, und
es umfasst eine Eingangsseite, die mittels einer oder mehrerer optischer Fasern (7a, 7b, 7c) an eine lichtemittierende Fläche jedes lichtemittierenden Bauteils (1 a-1 c) gekoppelt ist.

16. Vorrichtung nach einem der Ansprüche 1 bis 15, bei der die Beleuchtungsvorrichtung (LSRC, LSRC1) wenigstens eines der folgenden Kennzeichen aufweist:
sie erzeugt ein Lichtbündel, das ein zwischen 700 nm und 1100 nm liegendes Wellenlängenband abdeckt,
sie umfasst mehrere lichtemittierende Bauteile, die im Wesentlichen im gleichen Wellenlängenbereich Licht emittieren.

## Claims

1. A spectrometry device comprising:
a lighting device (LSRC, LSRC1) configured to generate a light beam covering a wavelength band,
a probe (PRB, PRB1-PRB4) configured so that the light beam coming from the lighting device interacts with a fluid to be analyzed (20), and
a spectrum analyzing device (SPAN, SPAN1) configured to receive the light beam after it has interacted with the fluid to be analyzed, and to provide light intensity measurements for various ranges of wavelengths, the spectrum analyzing device (SPAN, SPAN1) comprising a first light guide (21) coupled to the probe (PRB, PRB1-PRB4) and to a first optical filtering device (22), the first light guide receiving the light beam after it has interacted with the fluid to be analyzed (20) and guiding it while diffusing it to a first set of light-sensitive cells (24, 24') through the first optical filtering device, the first optical filtering device being arranged to send each of the light-sensitive cells a part of the light beam covering a respective range of wavelengths included in the wavelength band,
**characterized in that** the first light guide (21) has the shape of a plate made of a transparent material, receiving the light beam coming from the fluid to be analyzed (20) by an edge (210) of the plate and guiding it while spreading it to an opposite edge (211) of the plate opposite which the first optical filtering device (22) and the first set of light-sensitive cells (24, 24') are placed.

2. Device according to claim 1, wherein the spectrum analyzing device (SPAN1) comprises a second light guide (21') taking a part of the light beam directly at the output of the lighting device (LSRC, LSRC1), and guiding the part of the light beam to a second set of light-sensitive cells (24') through a second optical filtering device (22') arranged to send each of the light-sensitive cells a part of the light beam covering a respective range of wavelengths included in the wavelength band.

3. Device according to claim 2, wherein the second light guide (21') has the shape of a plate made of a transparent material, receiving the part of the light beam coming from the lighting device (LSRC, LSRC1) by an edge of the plate and guiding it while spreading it to an opposite edge of the plate opposite which the second filtering device (22') and the second set of light-sensitive cells (24') are placed.

4. Device according to one of claims 1 to 3, comprising an optical fiber light guide (12, 12', 4') coupled to each plate light guide (21, 21') in order to send it the light beam.

5. Device according to one of claims 1 to 4, wherein the spectrum analyzing device (SPAN, SPAN1) comprises a strip of photodetectors (24, 24') forming either the first or the first and the second sets of light-sensitive cells, the strip of photodetectors being fixed onto the opposite edge (211) of one of the plate light guides (21, 21') through the first or through the first and second optical filtering devices (22, 22').

6. Device according to one of claims 1 to 5, wherein each optical filtering device (22, 22') comprises a filter of the spectrum transmission interference type linearly variable over its length, and the first optical filtering device (22) covers a wavelength band between 700 nm and 1,100 nm.

7. Device according to one of claims 1 to 6, wherein the probe (PRB, PRB1-PRB4) comprises an optical fiber illuminating light guide (4) sending the light beam coming from the lighting device (LSRC, LSRC1) to the fluid to be analyzed (20), and an optical fiber collecting light guide (12, 12') coupled to the lighting guide and collecting at least partially the light beam having passed through the fluid to be analyzed and sending it to the spectrum analyzing device (SPAN, SPAN1).

8. Device according to claim 7, comprising a reflector (13, 13') coupled to the probe to send the light beam back after it has passed through the fluid to be analyzed (20) to the collecting light guide (12) through the fluid to be analyzed, either the collecting light guide comprising several collecting optical fibers (12) spread around an illuminating light guide (4), or the probe (PRB2) comprising a Y optical coupler (25) to send the light beam at the output of the illuminating light guide (4) into the fluid to be analyzed (20), and to send the light beam coming from the fluid to be analyzed into the collecting light guide (12').

9. Device according to claim 8, wherein the reflector (13, 13') is produced so as to reflect each incident light ray of a light beam substantially in an opposite direction to that of the incident light ray with a slightly wider angle.

10. Device according to claim 9, wherein the reflector (13, 13') is of Scotchlite® type or safety reflector type with retro-reflecting prisms or has the shape of a spherical shell centered substantially on the center of an output face of the illuminating light guide (4).

11. Device according to one of claims 8 and 9, wherein the probe comprises a converging lens (19) arranged between the output of the illuminating light guide (4) and the fluid to be analyzed (20).

12. Device according to claim 7, wherein the probe (PRB3, PRB4) comprises a converging lens (19) arranged between the output of the illuminating light guide (4) and the fluid to be analyzed (20) and a converging lens (19') arranged between the collecting light guide (12) and the fluid to be analyzed.

13. Device according to one of claims 1 to 12, wherein the lighting device comprises at least a light-emitting diode (1a-1g) emitting light covering the wavelength band, coupled to the illuminating light guide (4).

14. Device according to one of claims 1 to 13, wherein the lighting device (LSRC, LSRC1) comprises several light-emitting components (1a-1g) emitting light in distinct ranges of wavelengths included in the wavelength band, and an optical fiber illuminating light guide (4) coupled to the light-emitting components to send the light emitted by the light-emitting components to the probe (PRB, PRB1-PRB4).

15. Device according to claim 14, wherein the lighting device (LSRC, LSRC1) comprises a mixing optical component (3) to combine the light flows emitted by the light-emitting components (1a-1g) into a resulting light beam covering the wavelength band, the mixing optical component being coupled to the illuminating light guide (4) to guide the resulting light beam in the lighting guide, the mixing optical component (3) being configured to have at least one of the following characteristics:
it comprises an input face arranged to receive the light coming from the light-emitting components (1a-1g), an output face coupled to the illuminating light guide (4), and a shape having a substantially optimized revolution to send as much light as possible from the light-emitting components to the lighting guide,
it comprises an input face arranged to cover a light-emitting surface of each of the light-emitting components (1a-1g), and
it comprises an input face coupled by one or more optical fibers (7a, 7b, 7c) to a light-emitting surface of each of the light-emitting components (1a-1c).

16. Device according to one of claims 1 to 15, wherein the lighting device (LSRC, LSRC1) has at least one of the following characteristics:
it produces a light beam covering a wavelength band between 700 nm and 1,100 nm,
it comprises several light-emitting components emitting light substantially in the same range of wavelengths.
